# EUROPEAN PATENT SPECIFICATION

(11) **EP 3 975 411 B1**
(45) Date of publication and mention of the grant of the patent: **11.10.2023**
(21) Application number: 19950728.6
(22) Date of filing: 31.10.2019
(51) Int. Cl.: H02M 7/757, H02M 1/00, H02M 1/42, H02M 7/08, H02M 7/219, H02M 7/23

(54) **RECTIFIER, CHARGING SYSTEM AND ELECTRIC VEHICLE**
GLEICHRICHTER, AUFLADESYSTEM UND ELEKTROFAHRZEUG
REDRESSEUR, SYSTÈME CHARGEUR ET VÉHICULE ÉLECTRIQUE

(43) Date of publication of application: 30.03.2022
(73) Proprietor: Huawei Digital Power Technologies Co., Ltd., Shenzhen, Guangdong 518043 (CN)
(72) Inventor: FU, Dianbo, Shenzhen, Guangdong 518129 (CN); LIANG, Yongtao, Shenzhen, Guangdong 518129 (CN); WANG, Shaohua, Shenzhen, Guangdong 518129 (CN)
(74) Representative: Maiwald GmbH
(86) International application number: PCT/CN2019/114904
(87) International publication number: WO 2021/081967

(56) References cited:
- CN-A- 101 834 539
- CN-A- 109 167 524
- DE-A1-102017 212 572
- US-A1- 2003 053 324
- US-A1- 2018 048 246
- US-B1- 6 636 430
- Soeiro Thiago B.; Maia Gean J.; Ortmann M. S.; Heldwein Marcelo L.: "High Efficiency Three-Phase Unidirectional Buck-type PFC Rectifier Concepts", IECON 2013 - 39th Annual Conference of the IEEE Industrial Electronics Society, 10 November 2013 (2013-11-10), pages 7763-7768, XP032539679, ISSN: 1553-572X, DOI: 10.1109/IECON.2013.6700428

## Description

### TECHNICAL FIELD

This application relates to the field of power electronics, and in particular, to a rectifier, a charging system, and an electric vehicle.

### BACKGROUND

In a conventional technology, a high-frequency semiconductor component is generally used as a switching component in a rectifier applied to fields such as an uninterruptible power supply, wind power generation, and a new energy vehicle, to improve a power density.

The rectifier may have a plurality of structures. A power factor correction (power factor correction, PFC) circuit is widely used due to high-efficiency conversion of the circuit. When the PFC circuit works, each switching transistor in the PFC circuit is directly connected to an alternating current power supply, and a pulsating current whose amplitude changes greatly flows through the switching transistor. Therefore, when a switching transistor is selected for the PFC circuit, there are specific requirements on a voltage withstand level of the switching transistor and a maximum pulsating current flowing through the switching transistor, and the two factors are both key constraints on costs of the switching transistor. Therefore, the existing rectifier has high costs while implementing high-efficiency conversion.
United States patent application US 2003/0053324 A1 discloses a power conversion device with a power diode rectifier, voltage-type self-commutated power converters and a DC smoothing capacitor. A phase control circuit generates gate signals of self-turn-off elements of the power converter using a phase angle instruction value and phase signals for each phase.
German patent application DE 10 2017 212 572 A1 discloses a rectifier comprising a passive rectifier and a pulse rectifier connected in parallel. The pulse rectifier is controlled such that it generates a defined portion of an electrical intermediate circuit voltage.
United States patent application US 2018/0048246 A1 discloses another rectifier. In a first mode of operation, only a residual current is passed through switching elements of an inverter, and in a second mode of operation, a voltage of an alternator is rectified and stepped up.

Therefore, the existing rectifier needs to be further studied.

### SUMMARY

Embodiments of this application provide a rectifier according to claim 1, a charging system according to claim 7, and an electric vehicle according to claim 8, to reduce costs of the rectifier while implementing high-efficiency conversion of the rectifier.

According to a first aspect, an embodiment of this application provides a rectifier, where the rectifier includes an alternating current/direct current conversion circuit (AC/DC conversion circuit) and a power factor correction circuit (PFC circuit). The AC/DC conversion circuit includes diodes, a three-phase alternating current side that is of the AC/DC conversion circuit and that is used to receive a three-phase alternating current voltage is connected to an alternating current side of the PFC circuit, and a direct current side of the AC/DC conversion circuit is connected to a direct current side of the PFC circuit. The AC/DC conversion circuit may be configured to convert the three-phase alternating current voltage into a direct current voltage. The PFC circuit may be configured to improve conversion efficiency of the rectifier.

The AC/DC conversion circuit is configured to: when the three-phase alternating current voltage is received by using the three-phase alternating current side of the AC/DC conversion circuit and an absolute value of a difference between a voltage value of a first-phase alternating current voltage in the three-phase alternating current voltage and a voltage value of a second-phase alternating current voltage in the three-phase alternating current voltage is greater than a voltage value of a third-phase alternating current voltage in the three-phase alternating current voltage, convert the first-phase alternating current voltage and the second-phase alternating current voltage into a first direct current voltage.

The PFC circuit is configured to: when the absolute value of the difference between the voltage value of the first-phase alternating current voltage and the voltage value of the second-phase alternating current voltage is greater than the voltage value of the third-phase alternating current voltage, convert the third-phase alternating current voltage into a second direct current voltage.

A voltage value of the first direct current voltage may be equal to a voltage value of the second direct current voltage. Specifically, the direct current side of the AC/DC conversion circuit is connected to the direct current side of the PFC circuit, the direct current side of the AC/DC conversion circuit outputs the first direct current voltage, and the direct current side of the PFC circuit outputs the second direct current voltage, to supply power to a charged device. Both the three-phase alternating current side of the AC/DC conversion circuit and the alternating current side of the PFC circuit may be connected to an alternating current power supply, and the alternating current power supply is configured to output a three-phase alternating current voltage.

Further, positive directions and negative directions of the first direct current voltage and the second direct current voltage may be the same. A specific meaning of "positive directions and negative directions of the first direct current voltage and the second direct current voltage are the same" may be as follows: If the direct current side of the AC/DC conversion circuit is connected to the direct current side of the PFC circuit, a side that is in the direct current side of the AC/DC conversion circuit and that outputs a high level is connected to a side that is in the direct current side of the PFC circuit and that outputs a high level, and a side that is in the direct current side of the AC/DC conversion circuit and that outputs a low level is connected to a side that is in the direct current side of the PFC circuit and that outputs a low level.

According to the rectifier provided in the first aspect, when the rectifier is configured to charge the charged device (for example, a power battery), the AC/DC conversion circuit and the PFC circuit work in parallel. The three-phase alternating current side of the AC/DC conversion circuit receives three-phase alternating current power whose phase and voltage value are constantly changing. Therefore, when it is determined that an absolute value of a difference between voltage values of two phases of alternating current voltages in the three-phase alternating current voltage is greater than a voltage value of the other phase of alternating current voltage, the AC/DC conversion circuit converts the two phases of alternating current voltages into the first direct current voltage, and the PFC circuit converts the other phase of alternating current voltage into the second direct current voltage. Therefore, when the charged device is charged, most alternating current voltage in the three-phase alternating current voltages flows through the AC/DC conversion circuit, and only one phase of alternating current power flows through the PFC circuit. In this way, an amplitude of a pulsating current flowing through switching transistors in the PFC circuit is reduced. Therefore, a low-cost switching transistor may be used to implement high-efficiency conversion of the rectifier, and costs of the switching transistor are reduced.

In summary, according to the rectifier provided in this embodiment of this application, costs of the rectifier can be reduced while high-efficiency conversion of the rectifier is implemented.

The rectifier provided in the first aspect further includes a controller, and the controller is configured to control the PFC circuit to convert the third-phase alternating current voltage in the three-phase alternating current voltage into the second direct current voltage.

According to the foregoing solution, the charged device may be charged by using the rectifier under control of the controller.

In addition, the controller may be further configured to control the PFC circuit to separately convert a third direct current voltage into a fourth-phase alternating current voltage, a fifth-phase alternating current voltage, and a sixth-phase alternating current voltage.

According to the foregoing solution, the charged device may supply, by using the rectifier under control of the controller, power to a power consumption device connected to the alternating current side of the PFC circuit.

The PFC circuit includes a first boost (boost) circuit, a second boost circuit, a third boost circuit, a first bus capacitor, and a second bus capacitor.

The first bus capacitor and the second bus capacitor are connected in series to form a series branch. An alternating current side of the first boost circuit, an alternating current side of the second boost circuit, and an alternating current side of the third boost circuit form the alternating current side of the PFC circuit. A direct current side of the first boost circuit, a direct current side of the second boost circuit, and a direct current side of the third boost circuit are connected in parallel to form a first parallel branch. The series branch and the first parallel branch are connected in parallel to form a second parallel branch. Two ends of the second parallel branch are the direct current side of the PFC circuit.

The first boost circuit includes a first inductor, a first switching transistor, and a second switching transistor, a first terminal of the first inductor is connected to the three-phase alternating current side of the AC/DC conversion circuit, the first switching transistor is connected between a second terminal of the first inductor and a positive terminal of the first bus capacitor, and the second switching transistor is connected between the second terminal of the first inductor and a negative terminal of the second bus capacitor; or the second boost circuit includes a second inductor, a third switching transistor, and a fourth switching transistor, a first terminal of the second inductor is connected to the three-phase alternating current side of the AC/DC conversion circuit, the third switching transistor is connected between a second terminal of the second inductor and a positive terminal of the first bus capacitor, and the fourth switching transistor is connected between the second terminal of the second inductor and a negative terminal of the second bus capacitor; or the third boost circuit includes a third inductor, a fifth switching transistor, and a sixth switching transistor, a first terminal of the third inductor is connected to the three-phase alternating current side of the AC/DC conversion circuit, the fifth switching transistor is connected between a second terminal of the third inductor and a positive terminal of the first bus capacitor, and the sixth switching transistor is connected between the second terminal of the third inductor and a negative terminal of the second bus capacitor.

According to the rectifier provided in the first aspect, when the PFC circuit converts the third-phase alternating current voltage, the PFC circuit works in a single-phase state. Because the boost circuit uses a power factor correction circuit structure, efficiency of converting alternating current power by the PFC circuit can be improved, so that high-efficiency conversion of the rectifier is implemented.

In a possible design, the AC/DC conversion circuit includes a first single-phase converter, a second single-phase converter, and a third single-phase converter; the first single-phase converter, the second single-phase converter, and the third single-phase converter each include diodes; an alternating current side of the first single-phase converter, an alternating current side of the second single-phase converter, and an alternating current side of the third single-phase converter form the three-phase alternating current side of the AC/DC conversion circuit; and a direct current side of the first single-phase converter, a direct current side of the second single-phase converter, and a direct current side of the third single-phase converter are connected in parallel to form the direct current side of the AC/DC conversion circuit.

In a possible design, the first single-phase converter includes a first diode and a second diode, the first diode is connected between the three-phase alternating current side of the AC/DC conversion circuit and the positive terminal of the first bus capacitor, and the second diode is connected between the first diode and the negative terminal of the second bus capacitor; the second single-phase converter includes a third diode and a fourth diode, the third diode is connected between the three-phase alternating current side of the AC/DC conversion circuit and the positive terminal of the first bus capacitor, and the fourth diode is connected between the third diode and the negative terminal of the second bus capacitor; and the third single-phase converter includes a fifth diode and a sixth diode, the fifth diode is connected between the three-phase alternating current side of the AC/DC conversion circuit and the positive terminal of the first bus capacitor, and the sixth diode is connected between the fifth diode and the negative terminal of the second bus capacitor.

According to the rectifier provided in the first aspect, the AC/DC conversion circuit works in the single-phase state when the AC/DC conversion circuit converts the first-phase alternating current voltage and the second-phase alternating current voltage. In addition, because the single-phase converters each include diodes, component costs of the AC/DC conversion circuit are low.

In a possible design, the rectifier provided in the first aspect further includes a fourth inductor, a fifth inductor, and a sixth inductor, where a first terminal of the fourth inductor is configured to receive the first-phase alternating current voltage in the three-phase alternating current voltage, and a second terminal is connected to the three-phase alternating current side of the AC/DC conversion circuit; a first terminal of the fifth inductor is configured to receive the second-phase alternating current voltage in the three-phase alternating current voltage, and a second terminal is connected to the three-phase alternating current side of the AC/DC conversion circuit; and a first terminal of the sixth inductor is configured to receive the third-phase alternating current voltage in the three-phase alternating current voltage, and a second terminal is connected to the three-phase alternating current side of the AC/DC conversion circuit.

According to the foregoing solution, a charging current may be maintained stable by using the fourth inductor, the fifth inductor, and the sixth inductor.

In a possible design, the PFC circuit is further configured to: separately convert the third direct current voltage received by using the direct current side of the PFC circuit into the fourth-phase alternating current voltage, the fifth-phase alternating current voltage, and the sixth-phase alternating current voltage, and output the fourth-phase alternating current voltage, the fifth-phase alternating current voltage, and the sixth-phase alternating current voltage to the power consumption device connected to the alternating current side of the PFC circuit.

According to the rectifier provided in the first aspect, when the rectifier charges the power consumption device, a component that is in the AC/DC conversion circuit and that is configured to perform rectification is a diode. Due to a single-phase conductive characteristic of the diode, the AC/DC conversion circuit does not work at this time. In other words, when the charged device is discharged, only the PFC circuit in the rectifier works, so that low-power inversion can be implemented.

In summary, according to the rectifier provided in this embodiment of this application, the power consumption device connected to the alternating current side of the PFC circuit can be charged.

According to a second aspect, an embodiment of this application further provides a charging apparatus, where the charging apparatus includes the rectifier provided in any one of the first aspect or the possible designs thereof.

In a possible design, the charging apparatus further includes an alternating current power supply, and the alternating current power supply is configured to supply power to the rectifier. In other words, the alternating current power supply may output a three-phase alternating current voltage.

In a possible design, the charging apparatus further includes a charged device, and the rectifier is configured to charge the charged device.

In addition, for technical effects brought by any possible design manner in the second aspect, refer to the technical effects brought by the different design manners in the first aspect. Details are not described herein again.

According to a third aspect, an embodiment of this application further provides a charging system, where the charging system includes the rectifier provided in any one of the first aspect or the possible designs thereof.

In a possible design, the charging system is connected between a wind turbine generator system of a wind turbine generation system and a battery pack, and the charging system is configured to charge the battery pack by using alternating current power generated by the wind turbine generator system.

In a possible design, the charging system is connected between a photovoltaic panel of a photovoltaic power generation system and a battery pack, and the charging system is configured to charge the battery pack by using alternating current power generated by the photovoltaic panel.

In a possible design, the charging system is connected between an input side of an uninterruptible power supply and a battery pack, and the charging system is configured to charge the battery by using alternating current power received from the uninterruptible power supply.

In a possible design, the charging system is a charging pile, and is connected between an alternating current power supply and an electric vehicle, and the charging system is configured to charge the electric vehicle.

In addition, for technical effects brought by any possible design manner in the third aspect, refer to the technical effects brought by the different design manners in the first aspect. Details are not described herein again.

According to a fourth aspect, an embodiment of this application further provides a charging/discharging system, where the charging/discharging system includes the rectifier provided in any one of the first aspect or the possible designs thereof.

In a possible design, the charging/discharging system further includes a power consumption device, and the rectifier is configured to charge the power consumption device.

Specifically, the power consumption device may be a terminal such as an induction cooker, a rice cooker, or a mobile phone.

In a possible design, the charging/discharging system further includes a charged device, and the charged device is configured to supply power to the rectifier.

Specifically, the charged device may be a power battery. For example, the charged device may be a power battery such as a NiMH battery, a lithium battery, or a lead-acid battery.

In addition, for technical effects brought by any possible design manner in the fourth aspect, refer to the technical effects brought by the different design manners in the first aspect. Details are not described herein again.

According to a fifth aspect, an embodiment of this application further provides an electric vehicle, where the electric vehicle includes a power battery pack and the rectifier provided in any one of the first aspect or the possible designs thereof, the power battery pack is configured to provide power for the electric vehicle, and the rectifier is configured to charge the power battery pack.

In addition, for technical effects brought by any possible design manner in the fifth aspect, refer to the technical effects brought by the different design manners in the first aspect. Details are not described herein again.

### BRIEF DESCRIPTION OF DRAWINGS

FIG. 1 is a schematic diagram of a structure of an on-board charger in a conventional technology;
FIG. 2 is a schematic diagram of a structure of a rectifier according to an embodiment of this application;
FIG. 3 is a schematic diagram of a structure of another rectifier according to an embodiment of this application;
FIG. 4 is a schematic diagram of a structure of still another rectifier according to an embodiment of this application;
FIG. 5 is a schematic diagram of a structure of an AC/DC conversion circuit according to an embodiment of this application;
FIG. 6 is a schematic diagram of a structure of a PFC circuit according to an embodiment of this application;
FIG. 7 is a schematic diagram of a structure of yet another rectifier according to an embodiment of this application;
FIG. 8 is a schematic diagram of a structure of a charging system according to an embodiment of this application;
FIG. 9 is a schematic diagram of a structure of a charging/discharging system according to an embodiment of this application; and
FIG. 10 is a schematic diagram of a structure of an electric vehicle according to an embodiment of this application.

### DESCRIPTION OF EMBODIMENTS

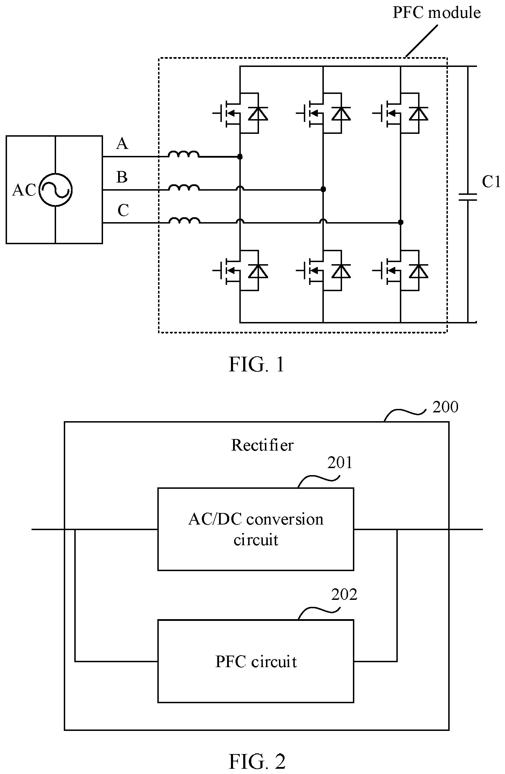

In a conventional technology, a possible structure of a rectifier may be shown in FIG. 1. The rectifier shown in FIG. 1 includes a power factor correction (PFC) module. Specifically, when the rectifier works in a rectification state and supplies power to an apparatus (for example, a power battery) subsequently connected to the rectifier, three-phase alternating current power is input from the left of the PFC module. The PFC module is configured to: convert the received three-phase alternating current power into direct current power, and improve efficiency of converting into alternating current power by the rectifier. Two terminals of a capacitor C1 output the direct current power to supply power to the apparatus subsequently connected to the rectifier. When the rectifier works in an inversion state, direct current power is input from the right of C1, and the PFC module is configured to: convert the direct current power at the two terminals of C1 into alternating current power, and output the alternating current power from the left of the PFC module.

Although the rectifier shown in FIG. 1 can charge the power battery, a pulsating current whose amplitude changes greatly flows through each of switching transistors S1 to S4 when a PFC circuit works. Therefore, when a switching transistor is selected for the PFC circuit, there are specific requirements on a voltage withstand level of the switching transistor and a maximum pulsating current flowing through the switching transistor, and the two factors are both key constraints on costs of the switching transistor.

Therefore, the rectifier in the conventional technology has high costs while the rectifier implements high-efficiency conversion.

To make objectives, technical solutions, and advantages of this application clearer, the following further describes this application in detail with reference to the accompanying drawings.

Embodiments of this application provide a rectifier, a charging system, and an electric vehicle, to reduce costs of the rectifier while implementing high-efficiency conversion of the rectifier.

FIG. 2 is a schematic diagram of a structure of a rectifier according to an embodiment of this application. A rectifier 200 includes an alternating current (alternating current, AC)/direct current (direct current, DC) conversion circuit 201 (AC/DC conversion circuit 201) and a power factor correction circuit 202 (PFC circuit 202). The AC/DC conversion circuit 201 includes diodes, a three-phase alternating current side that is of the AC/DC conversion circuit 201 and that is used to receive a three-phase alternating current voltage is connected to an alternating current side of the PFC circuit 202, and a direct current side of the AC/DC conversion circuit 201 is connected to a direct current side of the PFC circuit 202.

The AC/DC conversion circuit 201 may be configured to: when the three-phase alternating current voltage is received by using the three-phase alternating current side of the AC/DC conversion circuit 201 and an absolute value of a difference between a voltage value of a first-phase alternating current voltage in the three-phase alternating current voltage and a voltage value of a second-phase alternating current voltage in the three-phase alternating current voltage is greater than a voltage value of a third-phase alternating current voltage in the three-phase alternating current voltage, convert the first-phase alternating current voltage and the second-phase alternating current voltage into a first direct current voltage. The PFC circuit 202 may be configured to: when the absolute value of the difference between the voltage value of the first-phase alternating current voltage and the voltage value of the second-phase alternating current voltage is greater than the voltage value of the third-phase alternating current voltage, convert the third-phase alternating current voltage into a second direct current voltage. Specifically, the first-phase alternating current voltage may be but is not limited to an A-phase voltage in the three-phase alternating current voltage, the second-phase alternating current voltage may be but is not limited to a B-phase voltage in the three-phase alternating current voltage, and the third-phase alternating current voltage may be but is not limited to a C-phase voltage in the three-phase alternating current voltage.

A voltage value of the first direct current voltage may be equal to a voltage value of the second direct current voltage. In this case, the direct current side (which outputs the first direct current voltage) of the AC/DC conversion circuit 201 may be electrically connected to a charged device (for example, a power battery), and the direct current side (which outputs the second direct current voltage) of the PFC circuit 202 may also be electrically connected to the charged device, to supply power to the charged device.

Further, positive directions and negative directions of the first direct current voltage and the second direct current voltage may be the same. A specific meaning of "positive directions and negative directions of the first direct current voltage and the second direct current voltage are the same" may be as follows: If the AC/DC conversion circuit 201 and the PFC circuit 202 are connected in parallel, a side that is in the direct current side of the AC/DC conversion circuit 201 and that outputs a high level is connected to a side that is in the direct current side of the PFC circuit 202 and that outputs a high level, and a side that is in the direct current side of the AC/DC conversion circuit 201 and that outputs a low level is connected to a side that is in the direct current side of the PFC circuit 202 and that outputs a low level.

In addition, in this embodiment of this application, both the three-phase alternating current side of the AC/DC conversion circuit 201 and the alternating current side of the PFC circuit 202 may be electrically connected to an alternating current power supply or a power consumption device. The alternating current power supply is configured to output a three-phase alternating current voltage. A rated voltage of the power consumption device may be three-phase alternating current power including a fourth-phase alternating current voltage, a fifth-phase alternating current voltage, and a sixth-phase alternating current voltage, or may be single-phase alternating current power including a fourth-phase alternating current voltage and a fifth-phase alternating current voltage. The power consumption device may be but is not limited to a terminal such as an alternating current generator, an induction cooker, a rice cooker, a mobile phone, a navigation device, a television, or a notebook.

When the rectifier 200 is configured to charge the charged device, the AC/DC conversion circuit 201 and the PFC circuit 202 work in parallel. The AC/DC conversion circuit 201 converts, into the first direct current voltage, the first-phase alternating current voltage and the second-phase alternating current voltage in the three-phase alternating current voltage that is output by the alternating current power supply. The PFC circuit 202 converts, into the second direct current voltage, the third-phase alternating current voltage in the three-phase alternating current voltage that is output by the alternating current power supply. Both the direct current side of the AC/DC conversion circuit 201 and the direct current side of the PFC circuit 202 are connected to the charged device. The first-phase alternating current voltage, the second-phase alternating current voltage, and the third-phase alternating current voltage constitute the three-phase alternating current voltage.

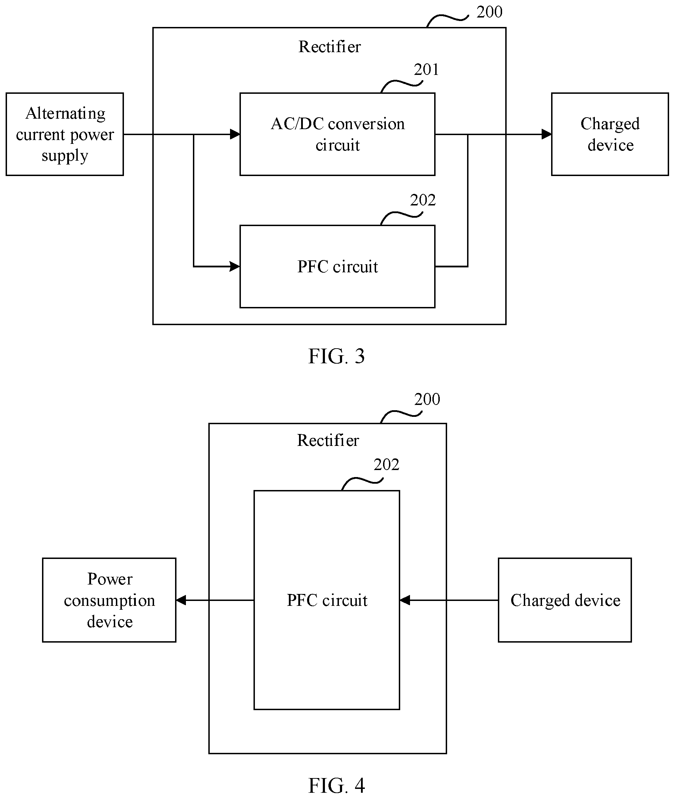

Specifically, when the charged device is charged, an equivalent circuit of the rectifier 200 may be shown in FIG. 3. In this case, the three-phase alternating current side of the AC/DC conversion circuit 201 and the alternating current side of the PFC circuit 202 are connected in parallel and then used as an input side of the rectifier 200, and the direct current side of the AC/DC conversion circuit 201 and the direct current side of the PFC circuit 202 are connected in parallel and then used as an output side of the rectifier 200. During specific implementation, the charged device may be a power battery or a direct current device. According to the rectifier 200 shown in FIG. 3, the power battery may be charged by using the alternating current power supply. The direct current device may be but is not limited to a direct current power supply device such as an induction cooker, a rice cooker, or a refrigerator.

It should be understood that, the first direct current voltage obtained by rectifying the first-phase alternating current voltage and the second-phase alternating current voltage by using the AC/DC conversion circuit 201 and the second direct current voltage obtained by rectifying the third-phase alternating current voltage by using the PFC circuit 202 fluctuate greatly, and the voltage value of the first direct current voltage and the voltage value of the second direct current voltage also have difficulty in meeting a voltage requirement of the charged device. Therefore, a direct current (direct current, DC) converter may further perform processing such as rectification and voltage regulation on the first direct current voltage and the second direct current voltage, to output a direct current voltage available to the charged device.

It should be understood that, when the first-phase alternating current voltage and the second-phase alternating current voltage are rectified by using the AC/DC conversion circuit 201 and/or the third-phase alternating current voltage is rectified by using the PFC circuit 202, an amplitude of a pulsating current flowing through the AC/DC conversion circuit 201 and/or an amplitude of a pulsating current flowing through the PFC circuit 202 change/changes greatly. To ensure stability of a charging current, the rectifier 200 further includes a fourth inductor, a fifth inductor, and a sixth inductor.

Specifically, a first terminal of the fourth inductor is configured to receive the first-phase alternating current voltage in the three-phase alternating current voltage, and a second terminal is connected to the three-phase alternating current side of the AC/DC conversion circuit. A first terminal of the fifth inductor is configured to receive the second-phase alternating current voltage in the three-phase alternating current voltage, and a second terminal is connected to the three-phase alternating current side of the AC/DC conversion circuit. A first terminal of the sixth inductor is configured to receive the third-phase alternating current voltage in the three-phase alternating current voltage, and a second terminal is connected to the three-phase alternating current side of the AC/DC conversion circuit. In other words, the fourth inductor, the fifth inductor, and the sixth inductor are separately connected between the alternating current power supply and the three-phase alternating current side of the AC/DC conversion circuit 201, so that the amplitude of the pulsating current flowing through the AC/DC conversion circuit 201 is stabilized in a fixed interval, to charge the charged device by using a constant current.

When the rectifier 200 is configured to supply power to the power consumption device by using the charged device, the AC/DC conversion circuit 201 includes diodes. Due to a single-phase conductive characteristic of the diode, only AC/DC conversion can be implemented, and the AC/DC conversion circuit 201 does not work at this time. In other words, when power is supplied to the power consumption device, only the PFC circuit 202 in the rectifier 200 works. Specifically, the PFC circuit 202 is configured to separately convert a third direct current voltage that is output by the charged device into the fourth-phase alternating current voltage, the fifth-phase alternating current voltage, and the sixth-phase alternating current voltage. The alternating current side of the PFC circuit 202 is connected to the power consumption device. The fourth-phase alternating current voltage, the fifth-phase alternating current voltage, and the sixth-phase alternating current voltage constitute the three-phase alternating current power available to the power consumption device, or the fourth-phase alternating current voltage and the fifth-phase alternating current voltage constitute the single-phase alternating current power available to the power consumption device.

Specifically, when power is supplied to the power consumption device, the equivalent circuit of the rectifier 200 may be shown in FIG. 4. In this case, the direct current side of the PFC circuit 202 is used as an input side of the rectifier 200, and the alternating current side of the PFC circuit 202 is used as an output side of the rectifier 200. During specific implementation, the charged device may be but is not limited to a power battery or an inverter connected to the alternating current power supply. According to the rectifier 200 shown in FIG. 4, power may be supplied to the power consumption device by using the charged device.

During specific implementation, if the rectifier 200 is applied to an on-board charger (on-board charger, OBC) configured in a new energy vehicle, the power consumption device may be but is not limited to an in-vehicle power consumption device, or may be but is not limited to a power battery in the new energy vehicle, and the charged device may be but is not limited to a power battery. According to the rectifier 200 shown in FIG. 4, power may be supplied to the in-vehicle power consumption device by using the power battery or another power battery may be charged by using the power battery.

For example, the power consumption device may be but is not limited to an in-vehicle power consumption device such as an alternating current generator, an induction cooker, or a rice cooker, and the charged device may be but is not limited to a power battery. In this case, when the power battery is discharged, the power battery may output direct current power of 90 V to 400 V The DC converter may perform voltage regulation processing on the direct current power that is output by the power battery and then output the direct current power to the PFC circuit 202. The PFC circuit 202 converts the direct current power that is output by the DC converter, and outputs single-phase alternating current power of 380 V or three-phase alternating current power of 380 V for use by the device such as an alternating current generator, an induction cooker, or a rice cooker. After the DC converter performs voltage regulation processing, a voltage value of the alternating current power that is output by the PFC circuit 202 can meet a rated voltage requirement of the device such as an alternating current generator, an induction cooker, or a rice cooker.

For example, the power consumption device and the charged device each may be the power battery in the new energy vehicle, where a battery level of the charged device is higher than a battery level of the power consumption device. In this case, the charged device may charge the power consumption device by using the rectifier 200. Specifically, when the charged device is discharged, the charged device may output direct current power of 90 V to 400 V The DC converter performs voltage regulation processing on the direct current power that is output by the charged device and then outputs the direct current power to the PFC circuit 202. The PFC circuit 202 converts the direct current power that is output by the DC converter, and outputs a three-phase alternating current voltage, to charge a power battery in another new energy vehicle.

It should be understood that, if the third direct current voltage that is output by the charged device is directly inverted by using the PFC circuit 202, an output voltage may have difficulty in meeting a voltage requirement of the power consumption device. Therefore, the DC converter may first perform rectification and voltage regulation on the third direct current voltage that is output by the power battery, and then the PFC circuit 202 performs inversion processing on the third direct current voltage on which rectification and voltage regulation are performed, to output the three-phase alternating current power or the single-phase alternating current power available to the power consumption device.

For ease of description, in this embodiment of this application, a process in which the rectifier 200 charges the charged device is referred to as "forward charging", and a process in which the charged device is discharged is referred to as "reverse discharging".

In actual application, a new energy vehicle is used as an example. The rectifier 200 may be fastened to the new energy vehicle, and the power consumption device may be connected to the rectifier 200 through a fixed interface on the new energy vehicle. For example, a power plug of a device such as the induction cooker or the rice cooker may be directly plugged into the fixed interface, so that the power battery supplies power to an alternating current motor, the induction cooker, and the rice cooker. In another implementation, the rectifier 200 may be disposed in a flexible and detachable manner, that is, a fixed interface is disposed on the new energy vehicle to implement a connection between the rectifier 200 and the charged device. In this case, the rectifier 200 may be considered as an apparatus independent of the new energy vehicle.

During specific implementation, the AC/DC conversion circuit 201 and the PFC circuit 202 each may include components such as a switching transistor, a diode, an inductor, and a capacitor. Working states of the AC/DC conversion circuit 201 and the PFC circuit 202 may be implemented by adjusting a working state of the component (for example, the switching transistor).

In this application, a controller may be used to adjust the foregoing working state. In other words, the rectifier 200 may further include a controller. The controller may be configured to control the PFC circuit 202 to convert, into the second direct current voltage, the third-phase alternating current voltage in the three-phase alternating current voltage that is output by the alternating current power supply. In this case, the rectifier 200 is in the "forward charging" process.

In addition, the controller may be further configured to control the PFC circuit 202 to separately convert the third direct current voltage that is output by the charged device into the fourth-phase alternating current voltage, the fifth-phase alternating current voltage, and the sixth-phase alternating current voltage. In this case, the rectifier 200 is in the "reverse discharging" process.

Specifically, if a switching transistor in each circuit of the rectifier 200 is a metal-oxide semiconductor (metal-oxide semiconductor, MOS) transistor, the controller may be connected to a gate electrode of the MOS transistor, so that the rectifier 200 implements rectification or inversion by controlling the MOS transistor to be turned on or off. If a switching transistor in each circuit of the rectifier 200 is a bipolar junction transistor (bipolar junction transistor, BJT), the controller may be connected to a base of the BJT, so that the rectifier 200 implements rectification or inversion by controlling the BJT to be turned on or off.

Optionally, the AC/DC conversion circuit 201 and the PFC circuit 202 in the rectifier 200 are connected in an integrated circuit form, and the controller may be connected to an integrated circuit including the AC/DC conversion circuit 201 and the PFC circuit 202.

Optionally, the AC/DC conversion circuit 201 and the PFC circuit 202 in the rectifier 200 are connected in an integrated circuit form, and the controller is also connected to the AC/DC conversion circuit 201 and the PFC circuit 202 in an integrated circuit form.

In specific implementation, the controller may be any one of a micro control unit (micro controller unit, MCU), a central processing unit (central processing unit, CPU), or a digital signal processor (digital signal processor, DSP). Certainly, a specific form of the controller is not limited to the foregoing examples.

The following describes specific structures of the AC/DC conversion circuit 201 and the PFC circuit 202 in the rectifier 200.

### 1. AC/DC conversion circuit 201

The AC/DC conversion circuit 201 has the three-phase alternating current side used to receive the three-phase alternating current voltage, and the three-phase alternating current side is connected to the alternating current power supply.

Specifically, the AC/DC conversion circuit 201 includes a first single-phase converter, a second single-phase converter, and a third single-phase converter. The first single-phase converter, the second single-phase converter, and the third single-phase converter each include diodes. An alternating current side of the first single-phase converter, an alternating current side of the second single-phase converter, and an alternating current side of the third single-phase converter form the three-phase alternating current side of the AC/DC conversion circuit 201. A direct current side of the first single-phase converter, a direct current side of the second single-phase converter, and a direct current side of the third single-phase converter are connected in parallel to form the direct current side of the AC/DC conversion circuit.

It is clearly that the AC/DC conversion circuit 201 may be implemented by using the three single-phase converters that are Y-shaped connected.

A purpose of disposing the single-phase converter is to receive the three-phase alternating current voltage by using the alternating current side of the single-phase converter, and convert the first-phase alternating current voltage and the second-phase alternating current voltage in the three-phase alternating current voltage into the first direct current voltage.

The following provides a specific structure of the single-phase converter.

Specifically, the first single-phase converter includes a first diode and a second diode, the first diode is connected between the three-phase alternating current side of the AC/DC conversion circuit and a positive terminal of a first bus capacitor, and the second diode is connected between the first diode and a negative terminal of a second bus capacitor.

The second single-phase converter includes a third diode and a fourth diode, the third diode is connected between the three-phase alternating current side of the AC/DC conversion circuit and the positive terminal of the first bus capacitor, and the fourth diode is connected between the third diode and the negative terminal of the second bus capacitor.

The third single-phase converter includes a fifth diode and a sixth diode, the fifth diode is connected between the three-phase alternating current side of the AC/DC conversion circuit and the positive terminal of the first bus capacitor, and the sixth diode is connected between the fifth diode and the negative terminal of the second bus capacitor.

The positive terminal of the first bus capacitor and the negative terminal of the second bus capacitor are two sides on the direct current side of the PFC circuit 202, the direct current side of the AC/DC conversion circuit 201 is connected to the direct current side of the PFC circuit 202, and connection points are the positive terminal of the first bus capacitor and the negative terminal of the second bus capacitor.

It should be understood that the first single-phase converter, the second single-phase converter, and the third single-phase converter each include two diodes, and may directly convert alternating current power that is greater than a cathode voltage of the diode, so that conversion efficiency is high, and component costs are low. Therefore, costs of converting alternating current power by the AC/DC conversion circuit 201 are reduced. Due to a single-phase conductive characteristic of the diode, the AC/DC conversion circuit 201 is only configured to implement rectification, but cannot implement inversion.

For ease of understanding, the following provides a specific example of the AC/DC conversion circuit 201.

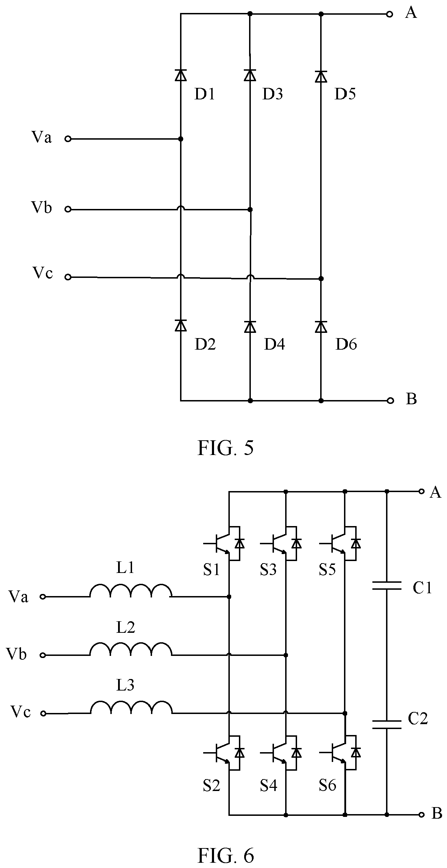

FIG. 5 is a schematic diagram of a structure of an AC/DC conversion circuit 201 according to an embodiment of this application. In FIG. 5, D1 may be considered as the first diode, D2 may be considered as the second diode, and D1 and D2 form the first single-phase converter. Similarly, D3 may be considered as the third diode, D4 may be considered as the fourth diode, and D3 and D4 form the second single-phase converter. D5 may be considered as the fifth diode, D6 may be considered as the sixth diode, and D5 and D6 form the third single-phase converter. In addition, Va may be considered as the alternating current side of the first single-phase converter, Vb may be considered as the alternating current side of the second single-phase converter, and Vc may be considered as the alternating current side of the third single-phase converter.

A connection relationship between components in the AC/DC conversion circuit 201 shown in FIG. 5 may be as follows: Cathodes of the diodes D1, D3, and D5 are connected to the positive terminal (an output side A) of the first bus capacitor C1, anodes of the diodes D2, D4, and D6 are connected to the negative terminal (an output side B) of the second bus capacitor C2, an anode of the diode D1 is connected to a cathode of the diode D2, an anode of the diode D3 is connected to a cathode of the diode D4, and an anode of the diode D5 is connected to a cathode of the diode D6.

When three-phase rectification is implemented by using the AC/DC conversion circuit 201 shown in FIG. 5, Va, Vb, and Vc are used as a three-phase input side to receive the three-phase alternating current voltage, A and B are used as a direct current output side, energy is transmitted from the left to the right, and the three-phase alternating current voltage that is input from the left is converted into direct current power and then output.

Certainly, the foregoing description of the structure of the AC/DC conversion circuit 201 is merely an example. In actual application, the AC/DC conversion circuit 201 may alternatively use another structure. For example, the AC/DC conversion circuit 201 may be a three-phase fully controlled bridge circuit, and is configured to implement three-phase rectification and three-phase inversion.

### 2. PFC circuit 202

The alternating current side of the PFC circuit 202 is a three-phase alternating current side, and the three-phase alternating current side of the PFC circuit 202 is connected to the three-phase alternating current side of the AC/DC conversion circuit 201.

Specifically, the PFC circuit includes a first boost (boost) boost circuit, a second boost circuit, a third boost circuit, the first bus capacitor, and the second bus capacitor. The first bus capacitor and the second bus capacitor are connected in series to form a series branch. An alternating current side of the first boost circuit, an alternating current side of the second boost circuit, and an alternating current side of the third boost circuit form the alternating current side of the PFC circuit. A direct current side of the first boost circuit, a direct current side of the second boost circuit, and a direct current side of the third boost circuit are connected in parallel to form a first parallel branch. The series branch and the first parallel branch are connected in parallel to form a second parallel branch. Two ends of the second parallel branch are the direct current side of the PFC circuit.

A purpose of disposing the boost circuit is as follows: When the rectifier 200 is in the "forward charging" process, three-phase rectification may be implemented by using the boost circuit, to convert, into the second direct current voltage, the third-phase alternating current voltage in the three-phase alternating current voltage that is output by the alternating current power supply; and when the rectifier 200 is in the "reverse discharging" process, single-phase inversion and/or three-phase inversion may be implemented by using the boost circuit.

A purpose of disposing the first bus capacitor and the second bus capacitor is to receive the first direct current voltage that is output by the single-phase converter and/or the second direct current voltage that is output by the boost circuit, stabilize the voltage value of the first direct current voltage and/or the voltage value of the second direct current voltage in a fixed value range, and output the stabilized voltage value to the charged device.

The following provides a specific structure of the boost circuit.

Specifically, the first boost circuit includes a first inductor, a first switching transistor, and a second switching transistor, a first terminal of the first inductor is connected to the three-phase alternating current side of the AC/DC conversion circuit, the first switching transistor is connected between a second terminal of the first inductor and the positive terminal of the first bus capacitor, and the second switching transistor is connected between the second terminal of the first inductor and the negative terminal of the second bus capacitor.

The second boost circuit includes a second inductor, a third switching transistor, and a fourth switching transistor, a first terminal of the second inductor is connected to the three-phase alternating current side of the AC/DC conversion circuit, the third switching transistor is connected between a second terminal of the second inductor and the positive terminal of the first bus capacitor, and the fourth switching transistor is connected between the second terminal of the second inductor and the negative terminal of the second bus capacitor.

The third boost circuit includes a third inductor, a fifth switching transistor, and a sixth switching transistor, a first terminal of the third inductor is connected to the three-phase alternating current side of the AC/DC conversion circuit, the fifth switching transistor is connected between a second terminal of the third inductor and the positive terminal of the first bus capacitor, and the sixth switching transistor is connected between the second terminal of the third inductor and the negative terminal of the second bus capacitor.

It should be understood that the first boost circuit, the second boost circuit, and the third boost circuit may convert alternating current power (namely, alternating current power that cannot be converted by the AC/DC conversion circuit 201) that is in the alternating current power and whose voltage value is less than a potential of the first bus capacitor and a potential of the second bus capacitor. Therefore, conversion efficiency of the rectifier is improved. In addition, only one phase of alternating current voltage in the three-phase alternating current power flows through the boost circuit. Therefore, fewer pulsating currents flow through the boost circuit, losses on the switching transistor and the inductor are correspondingly reduced, and conversion efficiency is high, namely, a low-cost switching transistor and a low-cost inductor may be used to implement high-efficiency conversion of the rectifier.

For ease of understanding, the following provides a specific example of the PFC circuit 202.

FIG. 6 is a schematic diagram of a structure of a PFC circuit 202 according to an embodiment of this application. In FIG. 6, L1 may be considered as the first inductor, S1 may be considered as the first switching transistor, S2 may be considered as the second switching transistor, and L1, S1, and S2 form the first boost circuit. L2 may be considered as the second inductor, S3 may be considered as the third switching transistor, S4 may be considered as the fourth switching transistor, and L2, S3, and S4 form the second boost circuit. L3 may be considered as the third inductor, S5 may be considered as the fifth switching transistor, S6 may be considered as the sixth switching transistor, and L3, S5, and S6 form the third boost circuit. C1 may be considered as the first bus capacitor, and C2 may be considered as the second bus capacitor. Va may be considered as the alternating current side of the first boost circuit, Vb may be considered as the alternating current side of the second boost circuit, and Vc may be considered as the alternating current side of the third boost circuit.

A connection relationship between components in the PFC circuit 202 shown in FIG. 6 may be as follows: Drains of the switching transistors S1, S3, and S5 are connected to the positive terminal of C1, sources of S2, S4, and S6 are connected to the negative terminal of C2, a source of S1 is connected to a drain of S2, a source of S3 is connected to a drain of S4, and a source of S5 is connected to a drain of S6.

When three-phase rectification is implemented by using the PFC circuit 202 shown in FIG. 6, Va, Vb, and Vc are used as a three-phase input side to receive the three-phase alternating current voltage, A and B are used as a direct current output side, energy is transmitted from the left to the right, and the three-phase alternating current voltage that is input from the left is converted into direct current power and then output.

When three-phase or single-phase inversion is implemented by using the PFC circuit 202 shown in FIG. 6, A and B are used as a direct current input side, Va, Vb, and Vc are used as a three-phase output side, energy is transmitted from the right to the left, and direct current power that is input from the right is converted into three-phase alternating current power or single-phase alternating current power and then output.

In addition, in addition to implementing AC/DC conversion and DC/AC conversion by using the foregoing structure, the PFC circuit 202 may further obtain a high power factor and a low current harmonic by controlling the switching transistor in the PFC circuit 202 to be turned on or off.

It should be noted that the switching transistor in this embodiment of this application includes but is not limited to a complementary metal oxide semiconductor (complementary metal oxide semiconductor, CMOS) transistor, a MOS transistor, a BJT, and a silicon carbide (SiC) power transistor. A specific type of the switching transistor is not limited in this embodiment of this application. In the examples of the accompanying drawings of this application, an example in which a switching transistor is a MOS transistor is used for description. In actual application, a switching transistor of another type may be used. When the switching transistor of the another type is used, names of ports on the switching transistor are different, but functions are basically the same. For example, when the switching transistor is the BJT, a base electrode of the BJT is equivalent to a gate electrode of a MOS transistor, a collector electrode of the BJT is equivalent to a drain electrode of the MOS transistor, and an emitter electrode of the BJT is equivalent to a source electrode of the MOS transistor. Therefore, the rectifier implemented based on the MOS transistor in this application may be equivalent to a rectifier implemented based on the BJT.

An implementation and a principle when the switching transistor of the another type is used are similar to an implementation and a principle when the MOS transistor is used. Therefore, in this embodiment of this application, an example in which the switching transistor is the MOS transistor is used, and a specific implementation when the switching transistor of the another type is used is not described in detail.

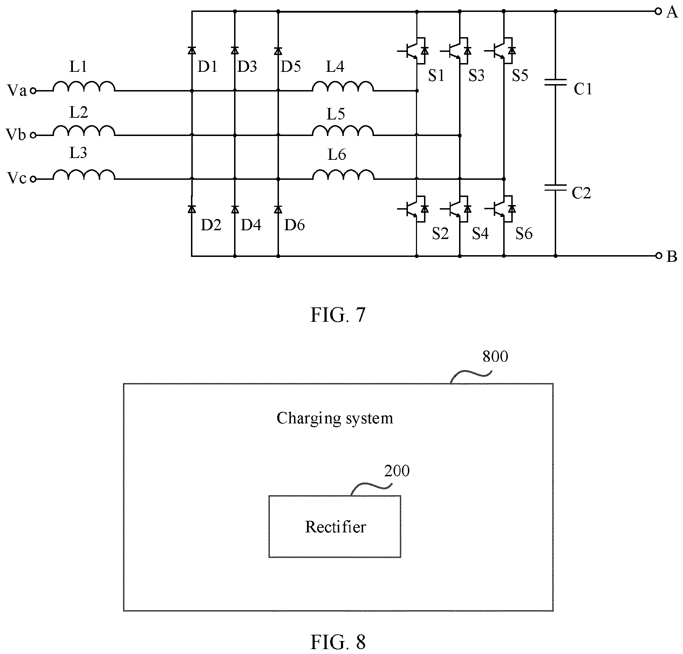

Based on the foregoing descriptions, for example, the rectifier provided in this embodiment of this application may be shown in FIG. 7.

In the AC/DC conversion circuit, phase wires on the alternating current input side are respectively connected to inductors L1, L2, and L3. The AC/DC conversion circuit includes diodes D1/D2/D/D4/D5/D6. Cathodes of D1, D3, and D5 are all connected to a positive terminal of a first bus capacitor C1, and anodes of D1, D3, and D5 are respectively connected to second terminals of L1, L2, and L3. Anodes of D2, D4, and D6 are connected to a negative terminal of the second bus capacitor C2, and cathodes of D2, D4, and D6 are respectively connected to the second terminals of L1, L2, and L3.

The PFC circuit includes inductors L4, L5, and L6, switching transistors S1/S2/S3/S4/S5/S6, the first bus capacitor C1, and the second bus capacitor C2. The second terminals of L1, L2, and L3 are respectively connected to a first terminal of L4, a first terminal of L5, and a first terminal of L6. Drains of S1, S3, and S5 are all connected to the positive terminal of C1, and sources of S1, S3, and S5 are respectively connected to a second terminal of L4, a second terminal of L5, and a second terminal of L6. Sources of S2, S4, and S6 are all connected to the negative terminal of C2, and drains of S2, S4, and S6 are respectively connected to the second terminal of the inductor L4, the second terminal of L5, and the second terminal of L6. Gate electrodes of the switching transistors are all connected to an external control circuit (or a controller). The control circuit implements a corresponding function of the rectifier by controlling the switching transistors to be on or off.

It is easily learned that the three-phase alternating current side of the AC/DC conversion circuit is connected to the alternating current power supply, the alternating current side of the PFC circuit is connected to the three-phase alternating current side of the AC/DC conversion circuit, and the direct current side of the AC/DC conversion circuit is connected to the direct current side of the PFC circuit.

When the rectifier shown in FIG. 7 is configured to perform rectification, Va, Vb, and Vc are used as an input side of the rectifier, and A and B are used as an output side of the rectifier, and are connected to the charged device.

Specifically, the AC/DC conversion circuit and the PFC circuit are subsequently connected to the alternating current power supply, and the charged device is subsequently connected to the AC/DC conversion circuit and the PFC circuit. Va, Vb, and Vc are the input side of the rectifier to receive the three-phase alternating current voltage. An example in which a voltage value relationship among Va, Vb, and Vc is Va>Vb>Vc is used. When an absolute value of a voltage difference between Va and Vc is greater than voltages at two ends of a circuit obtained after C1 and C2 are connected in series, D1, D2, D5, and D6 in the AC/DC conversion circuit constitute an H-bridge rectifier circuit to convert, into the first direct current voltage, the first-phase alternating current voltage and the third-phase alternating current voltage that are received by using Va and Vc, and output the first direct current voltage to the two ends of the circuit obtained after C1 and C2 are connected in series. In the PFC circuit, the second-phase alternating current voltage that is output by the alternating current power supply is first stored in L5 by using L2, L5, S4, S6 (or D6), and L3. After L5 is charged, S4 is turned off, S3 is turned on, a voltage and the second-phase alternating current voltage that are stored in L5 are converted into the second direct current voltage, and the second direct current voltage is output to the two ends of the circuit obtained after C1 and C2 are connected in series. Energy is output from the left to the right (in this case, Va, Vb, and Vc are used as the alternating current input side of the rectifier, and the two sides A and B that are connected to the power battery are used as the direct current output side of the rectifier).

According to the rectifier provided above, when the charged device is charged, only the third-phase alternating current voltage flows through the PFC circuit, AC/DC conversion may be directly performed on the first-phase alternating current voltage and the second-phase alternating current voltage that are output by the alternating current power supply, and conversion efficiency is high. Therefore, when the rectifier shown in FIG. 7 charges the charged device, less alternating current power flows through the switching transistor of the PFC circuit. In this way, a low-cost component may be selected as a switching transistor of the PFC circuit, so that costs of the rectifier can be reduced while high-power charging is implemented.

When the rectifier shown in FIG. 7 is configured to discharge the charged device, a direction in which energy is transmitted from right to left is an inversion state (in this case, the two sides A and B that are connected to the power battery are used as the direct current input side of the rectifier, and Va, Vb, and Vc are used as the alternating current output side of the rectifier). Single-phase inversion is used as an example, and the PFC circuit is subsequently connected to the charged device. Any two sides in Va, Vb, and Vc may be used as a single-phase alternating current output side, and are connected to the power consumption device to output single-phase alternating current power of 380 V, so as to supply power to the power consumption device. Three-phase inversion is used as an example, and the PFC circuit is subsequently connected to the charged device. Va, Vb, and Vc are used as a three-phase output side, and are connected to the power consumption device to output three-phase alternating current power, so as to supply power to the power consumption device.

According to the rectifier provided in this embodiment of this application, when the rectifier is configured to charge the charged device, the AC/DC conversion circuit and the PFC circuit work in parallel. The AC/DC conversion circuit converts, into the first direct current voltage, the first-phase alternating current voltage and the second-phase alternating current voltage in the three-phase alternating current power that is output by the alternating current power supply. The PFC circuit converts, into the second direct current voltage, the third-phase alternating current voltage in the three-phase alternating current power that is output by the alternating current power supply. When the charged device is charged, the PFC circuit needs to rectify only one phase of alternating current voltage, and an amplitude of a pulsating current flowing through the switching transistor is reduced. Therefore, a low-cost switching transistor component may be selected. In addition, less alternating current power and fewer pulsating currents flow through the inductor in the PFC circuit, and an inductor with a low specification may also be selected. This reduces costs of the rectifier.

When the rectifier is configured to discharge the charged device, because the AC/DC conversion circuit includes diodes and can only perform AC/DC conversion, the AC/DC conversion circuit does not work at this time. In other words, when the charged device is discharged, only some circuits in the rectifier work. Therefore, when the charged device is discharged, only the PFC circuit in the rectifier works, so that low-power inversion can be implemented.

In summary, according to the rectifier 200 provided in this embodiment of this application, during high-power charging, high-efficiency conversion is implemented, and costs of the rectifier are reduced.

Based on a same inventive concept, an embodiment of this application further provides a charging apparatus, and the charging apparatus includes the foregoing rectifier.

Optionally, the charging apparatus further includes an alternating current power supply, and the alternating current power supply is configured to supply power to the rectifier. In other words, the alternating current power supply may output a three-phase alternating current voltage.

Optionally, the charging apparatus further includes a charged device, and the rectifier is configured to charge the charged device.

Based on a same inventive concept, an embodiment of this application further provides a charging system. Refer to FIG. 8. A charging system 800 includes the foregoing rectifier 200.

In a possible design, the charging system 800 is connected between a wind turbine generator system of a wind turbine generation system and a battery pack, and the charging system 800 is configured to charge the battery pack by using alternating current power generated by the wind turbine generator system.

In a possible design, the charging system 800 is connected between a photovoltaic panel of a photovoltaic power generation system and a battery pack, and the charging system 800 is configured to charge the battery pack by using alternating current power generated by the photovoltaic panel.

In a possible design, the charging system 800 is connected between an input side of an uninterruptible power supply and a battery pack, and the charging system 800 is configured to charge the battery pack by using alternating current power received from the uninterruptible power supply.

In a possible design, the charging system 800 is a charging pile, and is connected between an alternating current power supply and an electric vehicle, and the charging system 800 is configured to charge the electric vehicle.

Optionally, the charging system 800 may further include an alternating current power supply, and the alternating current power supply is configured to supply power to the rectifier 200. In other words, the alternating current power supply may output a three-phase alternating current voltage.

Optionally, the charging system 800 further includes a charged device, and the rectifier 200 is configured to charge the charged device.

Specifically, the charged device may be a power battery and/or a battery pack. For example, the charged device may be a NiMH battery, a lithium battery, or a lead-acid battery.

Obviously, a person skilled in the art can make various modifications and variations to this application without departing from the scope of this application. In this way, this application is intended to cover these modifications and variations of this application provided that they fall within the scope of the claims of this application

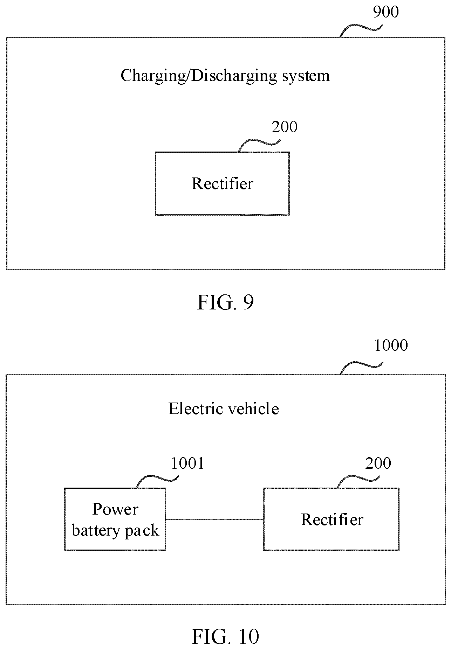

Based on a same inventive concept, an embodiment of this application further provides a charging/discharging system. Refer to FIG. 9. A charging/discharging system 900 includes the foregoing rectifier 200.

Optionally, the charging/discharging system 900 further includes a power consumption device, and the rectifier 200 is configured to charge the power consumption device.

Specifically, the power consumption device may be a terminal such as an induction cooker, a rice cooker, or a mobile phone.

Optionally, the charging/discharging system 900 further includes a charged device, and the charged device is configured to supply power to the rectifier 200.

Specifically, the charged device may be but is not limited to a power battery. For example, the charged device may be a power battery such as a NiMH battery, a lithium battery, or a lead-acid battery.

Based on a same inventive concept, the embodiments of this application further provide an electric vehicle. Refer to FIG. 10. An electric vehicle 1000 includes a power battery pack 1001 and the foregoing rectifier 200. The power battery pack 1001 is configured to provide power for the electric vehicle 1000, and the rectifier 200 is configured to charge the power battery pack 1001.

It should be understood that the solutions provided in this application may be applied to charging solutions of different electric vehicles. Specifically, the electric vehicles include but are not limited to a pure electric vehicle (pure EV/battery EV), a hybrid electric vehicle (hybrid electric vehicle, HEV), and a new energy vehicle (new energy vehicle). In addition, the rectifier provided in this application is not merely applied to the vehicle field, and may be further applied to fields such as wind power generation and photovoltaic power generation.

It should be noted that "a plurality of" in this application refers to two or more.

The term "and/or" in this application describes an association relationship for describing associated objects and represents that three relationships may exist. For example, A and/or B may represent the following three cases: Only A exists, both A and B exist, and only B exists. The character "/" generally indicates an "or" relationship between the associated objects.

The connection in this application describes a connection relationship between two objects, and may represent two connection relationships. For example, "A and B are connected" may represent the following two cases: A and B are directly connected, and A is connected to B by using C.

In addition, it should be understood that in the description of this application, terms such as "first" and "second" are merely used for distinguishing and description, but should not be understood as indicating or implying relative importance, or should not be understood as indicating or implying a sequence.

It should be understood that a system structure and a service scenario provided in the embodiments of this application are mainly intended to explain some possible implementations of the technical solutions in this application, and should not be construed as a unique limitation on the technical solutions in this application. A person of ordinary skill in the art may know that as a system evolves and a new service scenario emerges, the technical solutions provided in this application are also applicable to a same or similar technical problem.

## Claims

1. A rectifier (200), comprising an alternating current-direct current, AC-DC conversion circuit (201) and a power factor correction, PFC circuit (202), wherein
the AC-DC conversion circuit (201) comprises diodes, a three-phase alternating current side that is of the AC-DC conversion circuit (201) and that is used to receive a three-phase alternating current voltage is connected to an alternating current side of the PFC circuit (202), and a direct current side of the AC-DC conversion circuit (201) is connected to a direct current side of the PFC circuit (202);
the AC-DC conversion circuit (201) is configured to: when the three-phase alternating current voltage is received by using the three-phase alternating current side of the AC-DC conversion circuit (201) and an absolute value of a difference between a voltage value of a first-phase alternating current voltage in the three-phase alternating current voltage and a voltage value of a second-phase alternating current voltage in the three-phase alternating current voltage is greater than a voltage value of a third-phase alternating current voltage, convert the first-phase alternating current voltage and the second-phase alternating current voltage into a first direct current voltage;
the rectifier (200) further comprises a controller;
the PFC circuit (202) comprises a first boost, boost circuit, a second boost circuit, a third boost circuit, a first bus capacitor, and a second bus capacitor;
the first bus capacitor and the second bus capacitor are connected in series to form a series branch;
an alternating current side of the first boost circuit, an alternating current side of the second boost circuit, and an alternating current side of the third boost circuit form the alternating current side of the PFC circuit (202);
a direct current side of the first boost circuit, a direct current side of the second boost circuit, and a direct current side of the third boost circuit are connected in parallel to form a first parallel branch;
the series branch and the first parallel branch are connected in parallel to form a second parallel branch;
two ends of the second parallel branch form the direct current side of the PFC circuit (202); and
the first boost circuit comprises a first inductor, a first switching transistor, and a second switching transistor, a first terminal of the first inductor is connected to the three-phase alternating current side of the AC-DC conversion circuit (201), the first switching transistor is connected between a second terminal of the first inductor and a positive terminal of the first bus capacitor, and the second switching transistor is connected between the second terminal of the first inductor and a negative terminal of the second bus capacitor; or
the second boost circuit comprises a second inductor, a third switching transistor, and a fourth switching transistor, a first terminal of the second inductor is connected to the three-phase alternating current side of the AC-DC conversion circuit (201), the third switching transistor is connected between a second terminal of the second inductor and a positive terminal of the first bus capacitor, and the fourth switching transistor is connected between the second terminal of the second inductor and a negative terminal of the second bus capacitor; or
the third boost circuit comprises a third inductor, a fifth switching transistor, and a sixth switching transistor, a first terminal of the third inductor is connected to the three-phase alternating current side of the AC-DC conversion circuit (201), the fifth switching transistor is connected between a second terminal of the third inductor and a positive terminal of the first bus capacitor, and the sixth switching transistor is connected between the second terminal of the third inductor and a negative terminal of the second bus capacitor,
**characterized in that**
the PFC circuit (202) is configured to: when the absolute value of the difference between the voltage value of the first-phase alternating current voltage and the voltage value of the second-phase alternating current voltage is greater than the voltage value of the third-phase alternating current voltage, convert the third-phase alternating current voltage into a second direct current voltage; and
the controller is configured to control the PFC circuit (202) to convert the third-phase alternating current voltage in the three-phase alternating current voltage into the second direct current voltage.

2. The rectifier (200) according to claim 1, wherein the AC-DC conversion circuit (201) comprises a first single-phase converter, a second single-phase converter, and a third single-phase converter;
the first single-phase converter, the second single-phase converter, and the third single-phase converter each comprise diodes;
an alternating current side of the first single-phase converter, an alternating current side of the second single-phase converter, and an alternating current side of the third single-phase converter form the three-phase alternating current side of the AC-DC conversion circuit (201); and
a direct current side of the first single-phase converter, a direct current side of the second single-phase converter, and a direct current side of the third single-phase converter are connected in parallel to form the direct current side of the AC-DC conversion circuit (201).

3. The rectifier (200) according to claim 2, wherein the first single-phase converter comprises a first diode and a second diode, the first diode is connected between the three-phase alternating current side of the AC-DC conversion circuit (201) and the positive terminal of the first bus capacitor, and the second diode is connected between the first diode and the negative terminal of the second bus capacitor;
the second single-phase converter comprises a third diode and a fourth diode, the third diode is connected between the three-phase alternating current side of the AC-DC conversion circuit (201) and the positive terminal of the first bus capacitor, and the fourth diode is connected between the third diode and the negative terminal of the second bus capacitor; and
the third single-phase converter comprises a fifth diode and a sixth diode, the fifth diode is connected between the three-phase alternating current side of the AC-DC conversion circuit (201) and the positive terminal of the first bus capacitor, and the sixth diode is connected between the fifth diode and the negative terminal of the second bus capacitor.

4. The rectifier (200) according to any one of claims 1 to 3, further comprising a fourth inductor, a fifth inductor, and a sixth inductor, wherein
a first terminal of the fourth inductor is configured to receive the first-phase alternating current voltage in the three-phase alternating current voltage, and a second terminal is connected to the three-phase alternating current side of the AC-DC conversion circuit (201);
a first terminal of the fifth inductor is configured to receive the second-phase alternating current voltage in the three-phase alternating current voltage, and a second terminal is connected to the three-phase alternating current side of the AC-DC conversion circuit (201); and
a first terminal of the sixth inductor is configured to receive the third-phase alternating current voltage in the three-phase alternating current voltage, and a second terminal is connected to the three-phase alternating current side of the AC-DC conversion circuit (201).

5. The rectifier (200) according to any one of claims 1 to 4, wherein the PFC circuit (202) is further configured to: separately convert a third direct current voltage received by using the direct current side of the PFC circuit (202) into a fourth-phase alternating current voltage, a fifth-phase alternating current voltage, and a sixth-phase alternating current voltage, and output the fourth-phase alternating current voltage, the fifth-phase alternating current voltage, and the sixth-phase alternating current voltage to a power consumption device connected to the alternating current side of the PFC circuit (202).

6. The rectifier (200) according to claim 5, wherein the controller is further configured to control the PFC circuit (202) to separately convert the third direct current voltage into the fourth-phase alternating current voltage, the fifth-phase alternating current voltage, and the sixth-phase alternating current voltage.

7. A charging system (800), comprising the rectifier (200) according to any one of claims 1 to 6.

8. An electric vehicle (1000), comprising a power battery pack (1001) and the rectifier (200) according to any one of claims 1 to 6, wherein the power battery pack (1001) is configured to provide power for the electric vehicle (1000), and the rectifier (200) is configured to charge the power battery pack (1001).

## Patentansprüche

1. Gleichrichter (200), der eine Wechselstrom-Gleichstrom-Umwandlungsschaltung, AC-DC-Umwandlungsschaltung, (201) und eine Leistungsfaktorkorrekturschaltung, PFC-Schaltung, (202) umfasst, wobei
die AC-DC-Umwandlungsschaltung (201) umfasst: Dioden; eine dreiphasige Wechselstromseite, die zu der AC-DC-Umwandlungsschaltung (201) gehört, die verwendet wird, um eine dreiphasige Wechselstromspannung zu empfangen, und die mit einer Wechselstromseite der PFC-Schaltung (202) verbunden ist; und eine Gleichstromseite der AC-DC-Umwandlungsschaltung (201), die mit einer Gleichstromseite der PFC-Schaltung (202) verbunden ist;
die AC-DC-Umwandlungsschaltung (201) konfiguriert ist zum: wenn die dreiphasige Wechselstromspannung empfangen wird, indem die dreiphasige Wechselstromseite der AC-DC-Umwandlungsschaltung (201) verwendet wird, und ein Absolutwert einer Differenz zwischen einem Spannungswert einer Wechselstromspannung einer ersten Phase in der dreiphasigen Wechselstromspannung und einem Spannungswert einer Wechselstromspannung einer zweiten Phase in der dreiphasigen Wechselstromspannung größer als ein Spannungswert einer Wechselstromspannung einer dritten Phase ist, Umwandeln der Wechselstromspannung der ersten Phase und der Wechselstromspannung der zweiten Phase in eine erste Gleichstromspannung;
der Gleichrichter (200)ferner eine Steuereinheit umfasst,
die PFC-Schaltung (202) eine erste Verstärkung, Verstärkungsschaltung, eine zweite Verstärkungsschaltung, eine dritte Verstärkungsschaltung, einen ersten Buskondensator und einen zweiten Buskondensator umfasst,
der erste Buskondensator und der zweite Buskondensator in Reihe geschaltet sind, um einen Reihenzweig zu bilden;
eine Wechselstromseite der ersten Verstärkungsschaltung, eine Wechselstromseite der zweiten Verstärkungsschaltung und eine Wechselstromseite der dritten Verstärkungsschaltung die Wechselstromseite der PFC-Schaltung (202) bilden;
eine Gleichstromseite der ersten Verstärkungsschaltung, eine Gleichstromseite der zweiten Verstärkungsschaltung und eine Gleichstromseite der dritten Verstärkungsschaltung parallel geschaltet sind, um einen ersten Parallelzweig zu bilden;
der Reihenzweig und der erste Parallelzweig parallel geschaltet sind, um einen zweiten Parallelzweig zu bilden;
zwei Enden des zweiten Parallelzweigs die Gleichstromseite der PFC-Schaltung (202) bilden; und
die erste Verstärkungsschaltung eine erste Induktivität, einen ersten Schalttransistor und einen zweiten Schalttransistor umfasst, wobei eine erste Klemme der ersten Induktivität mit der dreiphasigen Wechselstromseite der AC-DC-Umwandlungsschaltung (201) verbunden ist, wobei der erste Schalttransistor zwischen eine zweite Klemme der ersten Induktivität und eine positive Klemme des ersten Buskondensators geschaltet ist, und wobei der zweite Schalttransistor zwischen die zweite Klemme der ersten Induktivität und eine negative Klemme des zweiten Buskondensators geschaltet ist; oder
die zweite Verstärkungsschaltung eine zweite Induktivität, einen dritten Schalttransistor und einen vierten Schalttransistor umfasst, wobei eine erste Klemme der zweiten Induktivität mit der dreiphasigen Wechselstromseite der AC-DC-Umwandlungsschaltung (201) verbunden ist, wobei der dritte Schalttransistor zwischen eine zweite Klemme der zweiten Induktivität und eine positive Klemme des ersten Buskondensators geschaltet ist, und wobei der vierte Schalttransistor zwischen die zweite Klemme der zweiten Induktivität und eine negative Klemme des zweiten Buskondensators geschaltet ist; oder
die dritte Verstärkungsschaltung eine dritte Induktivität, einen fünften Schalttransistor und einen sechsten Schalttransistor umfasst, wobei eine erste Klemme der dritten Induktivität mit der dreiphasigen Wechselstromseite der AC-DC-Umwandlungsschaltung (201) verbunden ist, wobei der fünfte Schalttransistor zwischen eine zweite Klemme der dritten Induktivität und eine positive Klemme des ersten Buskondensators geschaltet ist, und wobei der sechste Schalttransistor zwischen die zweite Klemme der dritten Induktivität und eine negative Klemme des zweiten Buskondensators geschaltet ist,
**dadurch gekennzeichnet, dass**
die PFC-Schaltung PFC (202) konfiguriert ist zum: wenn der Absolutwert der Differenz zwischen dem Spannungswert der Wechselstromspannung der ersten Phase und dem Spannungswert der Wechselstromspannung der zweiten Phase größer als der Spannungswert der Wechselstromspannung der dritten Phase ist, Umwandeln der Wechselstromspannung der dritten Phase in eine zweite Gleichstromspannung; und
die Steuereinheit konfiguriert ist zum Steuern der PFC-Schaltung (202), um die Wechselstromspannung der dritten Phase in der dreiphasigen Wechselstromspannung in die zweite Gleichstromspannung umzuwandeln.

2. Gleichrichter (200) nach Anspruch 1, wobei die AC-DC-Umwandlungsschaltung (201 einen ersten Einphasenwandler, einen zweiten Einphasenwandler und einen dritten Einphasenwandler umfasst,
der erste Einphasenwandler, der zweite Einphasenwandler und der dritte Einphasenwandler jeweils Dioden umfassen;
eine Wechselstromseite des ersten Einphasenwandlers, eine Wechselstromseite des zweiten Einphasenwandlers und eine Wechselstromseite des dritten Einphasenwandlers die dreiphasige Wechselstromseite der AC-DC-Umwandlungsschaltung (201) bilden; und
eine Gleichstromseite des ersten Einphasenwandlers, eine Gleichstromseite des zweiten Einphasenwandlers und eine Gleichstromseite des dritten Einphasenwandlers parallel geschaltet sind, um die Gleichstromseite der AC-DC-Umwandlungsschaltung (201) zu bilden.

3. Gleichrichter (200) nach Anspruch 2, wobei der erste Einphasenwandler eine erste Diode und eine zweite Diode umfasst, wobei die erste Diode zwischen die dreiphasige Wechselstromseite der AC-DC-Umwandlungsschaltung (201) und die positive Klemme des ersten Buskondensators geschaltet ist, und wobei die zweite Diode zwischen die erste Diode und die negative Klemme des zweiten Buskondensators geschaltet ist;
der zweite Einphasenwandler eine dritte Diode und eine vierte Diode umfasst, wobei die dritte Diode zwischen die dreiphasige Wechselstromseite der AC-DC-Umwandlungsschaltung (201) und die positive Klemme des ersten Buskondensators geschaltet ist, und wobei die vierte Diode zwischen die dritte Diode und die negative Klemme des zweiten Buskondensators geschaltet ist; und
der dritte Einphasenwandler eine fünfte Diode und eine sechste Diode umfasst, wobei die fünfte Diode zwischen die dreiphasige Wechselstromseite der AC-DC-Umwandlungsschaltung (201) und die positive Klemme des ersten Buskondensators geschaltet ist, und wobei die sechste Diode zwischen die fünfte Diode und die negative Klemme des zweiten Buskondensators geschaltet ist.

4. Gleichrichter (200) nach einem der Ansprüche 1 bis 3, der außerdem eine vierte Induktivität, eine fünfte Induktivität und eine sechste Induktivität umfasst, wobei:
eine erste Klemme der vierten Induktivität konfiguriert ist zum Empfangen der Wechselstromspannung der ersten Phase in der dreiphasigen Wechselstromspannung und eine zweite Klemme mit der dreiphasigen Wechselstromseite der AC-DC-Umwandlungsschaltung (201) verbunden ist;
eine erste Klemme der fünften Induktivität konfiguriert ist zum Empfangen der Wechselstromspannung der zweiten Phase in der dreiphasigen Wechselstromspannung und eine zweite Klemme mit der dreiphasigen Wechselstromseite der AC-DC-Umwandlungsschaltung (201) verbunden ist; und
eine erste Klemme der sechsten Induktivität konfiguriert ist zum Empfangen der Wechselstromspannung der dritten Phase in der dreiphasigen Wechselstromspannung und eine zweite Klemme mit der dreiphasigen Wechselstromseite der AC-DC-Umwandlungsschaltung (201) verbunden ist.

5. Gleichrichter (200) nach einem der Ansprüche 1 bis 4, wobei die PFC-Schaltung (202) außerdem konfiguriert ist zum: getrennten Umwandeln einer dritten Gleichstromspannung, die unter Verwendung der Gleichstromseite der PFC-Schaltung (202) empfangen wird, in eine Wechselstromspannung einer vierten Phase, eine Wechselstromspannung einer fünften Phase und eine Wechselstromspannung einer sechsten Phase, und Ausgeben der Wechselstromspannung der vierten Phase, der Wechselstromspannung der fünften Phase und der Wechselstromspannung der sechsten Phase an eine Stromverbrauchsvorrichtung, die mit der Wechselstromseite der PFC-Schaltung (202) verbunden ist.

6. Gleichrichter (200) nach Anspruch 5, wobei die Steuereinheit ferner konfiguriert ist zum Steuern der PFC-Schaltung (202), um die dritte Gleichstromspannung in die Wechselstromspannung der vierten Phase, die Wechselstromspannung der fünften Phase und die Wechselstromspannung der sechsten Phase umzuwandeln.

7. Aufladesystem (800), das einen Gleichrichter (200) nach einem der Ansprüche 1 bis 6 umfasst.

8. Elektrofahrzeug (1000), das einen Leistungsbatteriepack (1001) und den Gleichrichter (200) nach einem der Ansprüche 1 bis 6 umfasst, wobei der Leistungsbatteriepack (1001) konfiguriert ist zum Bereitstellen einer Leistung für das Elektrofahrzeug (1000) und wobei der Gleichrichter (200) konfiguriert ist zum Laden des Leistungsbatteriepacks (1001).

## Revendications

1. Redresseur (200), comprenant un circuit de conversion courant alternatif-courant continu, CA-CC (201) et un circuit de correction de facteur de puissance, PFC (202), dans lequel le circuit de conversion CA-CC (201) comprend des diodes, un côté de courant alternatif triphasé qui appartient au circuit de conversion CA-CC (201) et qui est utilisé pour recevoir une tension de courant alternatif triphasé est connecté à un côté de courant alternatif du circuit de PFC (202), et un côté de courant continu du circuit de conversion CA-CC (201) est connecté à un côté de courant continu du circuit de PFC (202) ;
le circuit de conversion CA-CC (201) est configuré pour : lorsque la tension de courant alternatif triphasé est reçue au moyen du côté de courant alternatif triphasé du circuit de conversion CA-CC (201) et qu'une valeur absolue d'une différence entre une valeur de tension d'une tension de courant alternatif de première phase de la tension de courant alternatif triphasé et une valeur de tension d'une tension de courant alternatif de deuxième phase de la tension de courant alternatif triphasé est supérieure à une valeur de tension d'une tension de courant alternatif de troisième phase, convertir la tension de courant alternatif de première phase et la tension de courant alternatif de deuxième phase en une première tension de courant continu ;
le redresseur (200) comprend en outre un contrôleur ;
le circuit de PFC (202) comprend un premier circuit survolteur, un deuxième circuit survolteur, un troisième circuit survolteur, un premier condensateur de liaison et un second condensateur de liaison ;
le premier condensateur de liaison et le second condensateur de liaison sont connectés en série pour former un branchement en série ;
un côté de courant alternatif du premier circuit survolteur, un côté de courant alternatif du deuxième circuit survolteur, et un côté de courant alternatif du troisième circuit survolteur forment le côté de courant alternatif du circuit de PFC (202) ;
un côté de courant continu du premier circuit survolteur, un côté de courant continu du deuxième circuit survolteur, et un côté de courant continu du troisième circuit survolteur sont connectés en parallèle pour former un premier branchement parallèle ;
le branchement en série et le premier branchement parallèle sont connectés en parallèle pour former un second branchement parallèle ;
deux extrémités du second branchement parallèle forment le côté de courant continu du circuit de PFC (202) ; et
le premier circuit survolteur comprend un premier inducteur, un premier transistor de commutation, et un deuxième transistor de commutation, une première borne du premier inducteur est connectée au côté de courant alternatif triphasé du circuit de conversion CA-CC (201), le premier transistor de commutation est connecté entre une seconde borne du premier inducteur et une borne positive du premier condensateur de liaison, et le deuxième transistor de commutation est connecté entre la seconde borne du premier inducteur et une borne négative du second condensateur de liaison ; ou
le deuxième circuit survolteur comprend un deuxième inducteur, un troisième transistor de commutation, et un quatrième transistor de commutation, une première borne du deuxième inducteur est connectée au côté de courant alternatif triphasé du circuit de conversion CA-CC (201), le troisième transistor de commutation est connecté entre une seconde borne du deuxième inducteur et une borne positive du premier condensateur de liaison, et le quatrième transistor de commutation est connecté entre la seconde borne du deuxième inducteur et une borne négative du second condensateur de liaison ; ou
le troisième circuit survolteur comprend un troisième inducteur, un cinquième transistor de commutation, et un sixième transistor de commutation, une première borne du troisième inducteur est connectée au côté de courant alternatif triphasé du circuit de conversion CA-CC (201), le cinquième transistor de commutation est connecté entre une seconde borne du troisième inducteur et une borne positive du premier condensateur de liaison, et le sixième transistor de commutation est connecté entre la seconde borne du troisième inducteur et une borne négative du second condensateur de liaison,
**caractérisé en ce que**
le circuit de PFC (202) est configuré pour : lorsque la valeur absolue de la différence entre la valeur de tension de la première tension de courant alternatif de première phase et la valeur de tension de la tension de courant alternatif de deuxième phase est supérieure à la valeur de tension de la tension de courant alternatif de troisième phase, convertir la tension de courant alternatif de troisième phase en une deuxième tension de courant continu ; et
le contrôleur est configuré pour commander le circuit de PFC (202) pour convertir la tension de courant alternatif de troisième phase de la tension de courant alternatif triphasé en la deuxième tension de courant continu.

2. Redresseur (200) selon la revendication 1, dans lequel le circuit de conversion CA-CC (201) comprend un premier convertisseur monophasé, un deuxième convertisseur monophasé et un troisième convertisseur monophasé ;
le premier convertisseur monophasé, le deuxième convertisseur monophasé et le troisième convertisseur monophasé comprennent chacun des diodes ;
un côté de courant alternatif du premier convertisseur monophasé, un côté de courant alternatif du deuxième convertisseur monophasé et un côté de courant alternatif du troisième convertisseur monophasé forment le côté de courant alternatif triphasé du circuit de conversion CA-CC (201) ; et
un côté de courant continu du premier convertisseur monophasé, un côté de courant continu du deuxième convertisseur monophasé et un côté de courant continu du troisième convertisseur monophasé sont connectés en parallèle pour former le côté de courant continu du circuit de conversion CA-CC (201).

3. Redresseur (200) selon la revendication 2, dans lequel le premier convertisseur monophasé comprend une première diode et une deuxième diode, la première diode est connectée entre le côté de courant alternatif triphasé du circuit de conversion CA-CC (201) et la borne positive du premier condensateur de liaison, et la deuxième diode est connectée entre la première diode et la borne négative du second condensateur de liaison ;
le deuxième convertisseur monophasé comprend une troisième diode et une quatrième diode, la troisième diode est connectée entre le côté de courant alternatif triphasé du circuit de conversion CA-CC (201) et la borne positive du premier condensateur de liaison, et la quatrième diode est connectée entre la troisième diode et la borne négative du second condensateur de liaison ; et
le troisième convertisseur monophasé comprend une cinquième diode et une sixième diode, la cinquième diode est connectée entre le côté de courant alternatif triphasé du circuit de conversion CA-CC (201) et la borne positive du premier condensateur de liaison, et la sixième diode est connectée entre la première diode et la borne négative du second condensateur de liaison.

4. Redresseur (200) selon l'une quelconque des revendications 1 à 3, comprenant en outre un quatrième inducteur, un cinquième inducteur, et un sixième inducteur, dans lequel
une première borne du quatrième inducteur est configurée pour recevoir la tension de courant alternatif de première phase de la tension de courant alternatif triphasé, et une seconde borne est connectée au côté de courant alternatif triphasé du circuit de conversion CA-CC (201) ;
une première borne du cinquième inducteur est configurée pour recevoir la tension de courant alternatif de deuxième phase de la tension de courant alternatif triphasé, et une seconde borne est connectée au côté de courant alternatif triphasé du circuit de conversion CA-CC (201) ; et
une première borne du sixième inducteur est configurée pour recevoir la tension de courant alternatif de troisième phase de la tension de courant alternatif triphasé, et une seconde borne est connectée au côté de courant alternatif triphasé du circuit de conversion CA-CC (201).

5. Redresseur (200) selon l'une quelconque des revendications 1 à 4, dans lequel le circuit de PFC (202) est en outre configuré pour : convertir séparément une troisième tension de courant continu reçue au moyen du côté de courant continu du circuit de PFC (202) en une tension de courant alternatif de quatrième phase, une tension de courant alternatif de cinquième phase, et une tension de courant alternatif de sixième phase, et émettre la tension de courant alternatif de quatrième phase, la tension de courant alternatif de cinquième phase, et la tension de courant alternatif de sixième phase vers un dispositif de consommation d'énergie connecté au côté de courant alternatif du circuit de PFC (202).

6. Redresseur (200) selon la revendication 5, dans lequel le contrôleur est en outre configuré pour commander le circuit de PFC (202) pour convertir séparément la troisième tension de courant continu en la tension de courant alternatif de quatrième phase, la tension de courant alternatif de cinquième phase, et la tension de courant alternatif de sixième phase.

7. Système de charge (800), comprenant le redresseur (200) selon l'une quelconque des revendications 1 à 6.

8. Véhicule électrique (1000), comprenant un bloc-batterie d'alimentation (1001) et le redresseur (200) selon l'une quelconque des revendications 1 à 6, dans lequel le bloc-batterie d'alimentation (1001) est configuré pour alimenter en énergie le véhicule électrique (1000), et le redresseur (200) est configuré pour charger le bloc-batterie d'alimentation (1001).
